# EUROPÄISCHE PATENTANMELDUNG

(11) **EP 1 671 926 A1**
(43) Veröffentlichungstag der Anmeldung: **21.06.2006**
(21) Anmeldenummer: 04029655.0
(22) Anmeldetag: 15.12.2004
(51) Int. Cl.: C01B 7/01, C25B 15/08, C25B 1/34

(54) **Verfahren zur Nutzung des Kühlwassers von Chlorwasserstoff-Syntheseanlagen**

(71) Anmelder: SGL CARBON AG, 65203 Wiesbaden (DE)
(72) Erfinder: Bienhüls, Christian, 86405 Meitingen (DE); Franz, Marcus, Dr., 86830 Schwabmünchen (DE); Melin, Marc, 86150 Augsburg (DE)

(57) **Zusammenfassung**

Die vorliegende Erfindung stellt ein Verfahren zur Kühlung eines Reaktors für die Synthese von Chlorwasserstoff bereit, wobei das durch die Kühlung des Reaktors erwärmte Wasser in einem anderen Prozess, beispielsweise zur Herstellung/Aufbereitung von Sole für eine Alkalichlorid-Elektrolyse, direkt stofflich genutzt wird. Die Wärmeauskopplung aus der Chlorwasserstoffbrennkammer durch das Kühlwasser erfolgt bevorzugt bei einer Temperatur von maximal 80 °C. Dann ist kein Überdruck im Kühlwasserkreislauf erforderlich, und es können preiswertere, weniger druckbeständige Werkstoffe eingesetzt werden. Die erfindungsgemäße Abwärmeauskopplung auf niedrigem Temperaturniveau erlaubt die Verwendung von Graphitbrennkammern für die Chlorwasserstoff Synthese.

## Beschreibung

Die vorliegende Erfindung betrifft ein Verfahren zur Kühlung eines Reaktors für die Synthese von Chlorwasserstoff bzw. Salzsäure, wobei das durch die Kühlung des Reaktors erwärmte Wasser in einem anderen Prozess, beispielsweise zur Herstellung oder Aufbereitung von Sole für eine Alkalichlorid-Elektrolyse, direkt stofflich genutzt wird.

Die Synthese von Chlorwasserstoff aus den Elementen ist ein exothermer Prozess. Pro kg erzeugten Chlorwasserstoffs wird eine Wärmemenge von 0,7 kWh freigesetzt. Die Wärmeabgabe ist ggf. noch höher, wenn als Ausgangsstoff chlorhaltige Rest- oder Abgase mit hohem Sauerstoffanteil, z.B. Sniff-Gas, eingesetzt werden. In entsprechend ausgerüsteten anlagen kann Wasserstoff durch ein anderes Brenngas, z.B. Erdgas, mit Zuspeisung von Luft substituiert werden.
Die Reaktion erfolgt in einem Reaktor mit einer Brennkammer, die gekühlt wird. Ist das Zielprodukt gasförmiger Chlorwasserstoff, dann ist der Brennkammer ein Gaskühler nachgeschaltet, aus welchem weitere Wärme abgeführt wird. Für die Herstellung von Salzsäure umfasst die Anlage eine Brennkammer und einen Absorber, in welchem der gasförmige Chlorwasserstoff in Wasser oder verdünnter Salzsäure absorbiert wird. Optional ist zwischen Brennkammer und Absorber ein Gaskühler vorgesehen. Die Absorption des Chlorwasserstoffs in Wasser ist ebenfalls ein exothermer Prozess, hier ist eine Wärmemenge von 0,5 kWh pro kg absorbierten Chlorwasserstoff abzuführen (Angaben aus dem Firmenprospekt "Diabon-HCl-Synthese", SGL Acotec GmbH, S. 19, 2000).

Es sind verschiedene Methoden bekannt, die bei der Chlorwasserstoff-Synthese in der Brennkammer und, wenn vorhanden, im Gaskühler oder/und Absorber freigesetzte Wärme auszukoppeln und energetisch zu nutzen, z.B. zu Heizzwecken oder zur Dampferzeugung.

Die Patentschrift DE 38 07 264 offenbart eine Vorrichtung zur Gewinnung von Sattdampf mit einem Druck von mindestens 7 bar (0,7 MPa) bei der Verbrennung von Chlor und Wasserstoff zu Chlorwasserstoff. Die Vorrichtung umfasst einen Wärmetauscher zur Übertragung der in der Brennkammer freigesetzten Reaktionswärme auf ein Wärmeträgermedium, z.B. Kühlwasser (unter Überdruck) oder ein Thermoöl, und einen mit dem Wärmetauscher in einem geschlossenen Wärmeträgerkreislauf gekoppelten Verdampfer. Die Übertragung der Reaktionswärme auf das Wärmeträgermedium erfolgt über vom Wärmeträgermedium durchströmte Rohre, die im mittleren Teil des Reaktors angeordnet sind. Dieser Teil des Reaktors ist nicht mit Graphit ausgekleidet, sondern besteht aus einem metallischen Werkstoff, bevorzugt Stahl, und muss daher nicht auf eine so niedrige Temperatur heruntergekühlt werden wie der weniger wärmebeständige Graphit. Dies erlaubt die Auskopplung von Wärme auf einem hohen, für die Herstellung von Sattdampf mit mindestens 7 bar ausreichenden Temperaturniveau (170 - 230°C). Die anderen, mit Graphit ausgekleideten Partien des Reaktors sind extra zu kühlen. Die Dampferzeugung erfolgt in bekannter Weise in einem mit Speisewasser versorgten Dampferzeuger. Erfolgt die Wärmeauskopplung auf diesem Temperaturniveau mit Wasser als Wärmeträgermedium, so muss dieses mit einem Druck von 0,9 bis 2,7 MPa beaufschlagt werden. Daher ist es unabdingbar, Wärmetauscher und Wärmeträgerkreislauf drucksicher auszulegen.

Aus der Patentschrift DE 33 137 61 ist ein Verfahren zur Synthese von Salzsäure mit Wärmerückgewinnung aus dem Ofen über einem ersten Kühlkreis und aus dem Absorber über einen zweiten Kühlkreis bekannt. Das auf 160 °C erwärmte Kühlwasser des ersten Kühlkreises wird zur Beheizung eines Dampferzeugers, der mit dem aufgewärmten Kühlwasser des Absorbers gespeist wird, genutzt. Auf diese Weise sollen die im Syntheseofen und im Absorber frei gesetzten Wärmemengen addiert werden. Die notwendige Abstimmung der an zwei Stellen gewonnenen Wärmemengen erschwert jedoch die Anpassung an Änderungen des Betriebszustands oder des Wärmebedarfs. Außerdem ist bei der Absorption nur eine für eine energetische Nutzung relativ geringe Erwärmung des Kühlwassers (auf 80 °C) möglich, denn die Temperatur des Absorbers muss niedrig gehalten werden, um das Sieden der Salzsäure zu verhindern. Dies gilt um so mehr, je höher die Konzentration der Salzsäure ist.

In der Patentanmeldung WO 01 25 143 wird ein Verfahren zur Chlorwasserstoff-Synthese mit verbesserter Energierückgewinnung beschrieben, welches die Erzeugung von Dampf mit einem Druck von 2,8 MPa erlaubt. An der Wand der Brennkammer sind vertikal verlaufende, von unter Druck gehaltenem Kühlwasser durchströmte Wärmetauscherrohre angeordnet. Als Werkstoff werden nickelreiche Legierungen verwendet, die einer Temperatur von mehr als 250 °C standhalten und so eine Wärmeauskopplung auf diesem Temperaturniveau zulassen. Eine weitere Auskopplung von Wärme erfolgt mittels eines zwischen dem Reaktor und dem Absorber vorgesehenen Konvektionskühlers, dessen Röhren das aus dem Reaktor austretende Gas durchströmt. Die Kühlwasserkreisläufe des Reaktors und des Konvektionskühlers sind mit einem Dampferzeuger gekoppelt, der die Abwärme zur Dampferzeugung nutzt.

All diesen bekannten Methoden ist gemeinsam, dass das den Reaktor kühlende Wasser ausschließlich energetisch als Wärmeträgermedium genutzt wird, aber keine stoffliche Nutzung erfolgt. Dies hat mehrere technische und wirtschaftliche Nachteile.
Allein für den Zweck der Kühlung sind große Mengen an Wasser bereit zu stellen. Ist das Zielprodukt Salzsäue, so werden bei Erwärmung des Kühlwassers um 10 K 100 m³ Kühlwasser pro Tonne erzeugten Chlorwasserstoffs benötigt. Dieses Kühlwasser muss demineralisiert werden, um Korrosion der Leitungen und Kesselsteinbildung zu vermeiden.
Ein weiterer Nachteil der Nutzung des Kühlwassers als bloßer Wärmeträger zwischen einem Ort der Wärmeauskopplung und einem anderen Ort der Wärmenutzung ist die Notwendigkeit eines zweifachen Wärmeübergangs ("Wärmetauschs"): zuerst von den Reaktionsgasen an das Kühlwasser und dann vom aufgewärmten Kühlwasser an das Speisewasser des Dampferzeugers oder an eine andere die Wärme nutzende Vorrichtung. Jeder dieser Wärme- übergänge stellt einen Widerstand dar, der zu einer Herabsetzung des Wirkungsgrades führt.
Für eine effektive energetische Nutzung des aufgewärmten Kühlwassers ist es unumgänglich, dass der Wärmeträger auf ein möglichst hohen Temperaturniveau erhitzt wird, denn der Wirkungsgrad der Wärmenutzung ist um so höher, je größer die Differenz zwischen der Temperatur, mit der die Wärme der Nutzung, z.B. in der Dampferzeugung, zugeführt wird und der Temperatur nach der Wärmenutzung. Wegen der erwünschten hohen Temperatur des Wärmeträgermediums ist es nötig, die betreffenden Anlagenteile aus entsprechend hitzebeständigen Werkstoffen, z.B. speziellen Legierungen, anstelle von Graphit zu fertigen. Wird als Wärmeträger kein hochsiedendes Thermoöl, sondern Wasser verwendet, so ist es bei Wärmeauskopplung auf hohem Temperaturniveau ferner erforderlich, dass der Wärmeträgerkreislauf druckfest ausgelegt ist, d.h. dass die Standards der Pressure Equipment Directive 97/23/EC oder entsprechende Normen eingehalten werden.

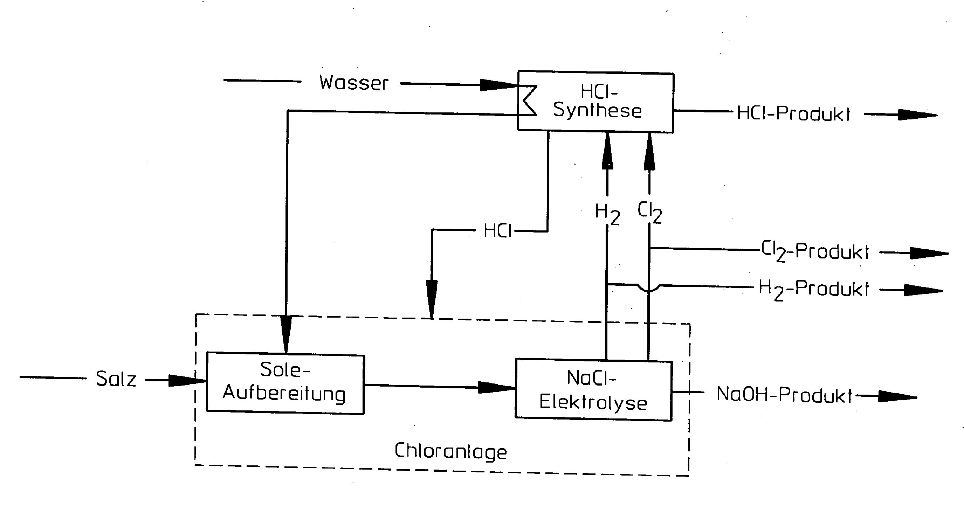

Erfindungsgemäß wird deshalb vorgeschlagen, dass aus dem Chlorwasserstoff-Reaktor austretende aufgewärmte Kühlwasser direkt stofflich zu nutzen. Unter stofflicher Nutzung wird in der vorliegenden Erfindung verstanden, dass das aufgewärmte Kühlwasser in einem andern Prozess, beispielsweise einem chemischen oder elektrochemischen Prozess, Prozess als Edukt, Hilfsstoff oder Lösungsmittel eingesetzt wird.
Beispielsweise bietet sich die Einspeisung des aufgeheizten Kühlwassers in die Soleaufbereitungsstufe einer Alkalichlorid-Elektrolyse an, denn Anlagen zur Alkalichlorid-Elektrolyse, welche Chlor und Wasserstoff liefern, werden häufig im Verbund mit Anlagen zur Synthese von Chlorwasserstoff bzw. Salzsäure betrieben. Die vorliegende Erfindung ist nicht auf die stoffliche Nutzung des aufgeheizten Kühlwassers als Lösungsmittel für die Soleerzeugung bzw. Soleaufbereitung von Alkalichlorid-Elektrolysen beschränkt. Die erfindungsgemäße Kopplung der Kühlung der Chlorwasserstoff-Synthese mit der Soleaufbereitung einer Alkalichlorid-Elektrolyse, in der durch Elektrolyse von Natriumchloridsole Natronlauge, Chlor und Wasserstoff hergestellt werden, ist in Figur 1 dargestellt.
- Figur 1: schematische Darstellung der erfindungsgemäßen Nutzung des aufgewärmten Kühlwassers der Chlorwasserstoff-Synthese zur Soleaufbereitung für eine Alkalichlorid-Elektrolyse

Das erfindungsgemäße Verfahren ist für alle bekannten Technologien der Alkalichlorid-Elektrolyse anwendbar. Die verschiedenen Verfahren der Alkalichlorid-Elektrolyse unterscheiden sich hinsichtlich des Aufbaus der Elektrolysezellen und der Zusammensetzung und Reinheit der Produkte.
Im Membranelektrolyseur sind Anoden- und Kathodenraum durch eine hydraulisch undurchlässige, für Kationen selektiv permeable Membran voneinander getrennt. Dem Anodenraum wird Sole zugeführt. An der Anode werden Chlorid-Ionen zu Chlor oxidiert, während die Alkalimetall-Kationen in Richtung des elektrischen Feldes die Membran passieren und in den Kathodenraum gelangen. Dort werden an der Kathode Wassermoleküle zu Wasserstoff reduziert, in der flüssigen Phase verbleibt Alkalilauge, die zur weiteren Verarbeitung aus dem Kathodenraum abgezogen wird. Die gasförmigen Produkte Chlor und Wasserstoff werden der Chlorwasserstoff-Synthese und ggf. weiteren Verwendungen zugeführt. Aus dem Anodenraum des Membran-Elektrolyseurs tritt eine an Alkalichlorid abgereicherte Dünnnsole aus, welche durch Zusatz von Alkalichlorid und Wasser wieder auf die Ausgangskonzentration gebracht werden muss. Hierfür wird der Soleaufbereitung das aufgewärmte Kühlwasser der Chlorwasserstoff Synthese zugeführt.
Ältere Verfahren der Alkalichlorid-Elektrolyse sind das Diaphragma- und das Amalgamverfahren. Zwar werden mittlerweile keine nach diesen Verfahren arbeitenden Anlagen mehr neu errichtet, in bestehenden Anlagen werden diese Technologien aber noch genutzt.
In Diaphragmazellen sind Anoden- und Kathodenraum durch ein poröses Diaphragma getrennt. Die Sole fließt vom Anodenraum, wo an der Anode Chlorid-Ionen zu Chlor oxidiert werden, durch das Diaphragma in den Kathodenraum, wo an der Kathode Wasserstoff gebildet wird. Das Diaphragma verhindert die Vermischung und Rückreaktion der Produktgase. Den Kathodenraum verlässt eine Lauge mit einer massebezogenen Konzentration von ca. 11 bis 13 % Alkalihydroxid und einem Restgehalt an Alkalichlorid. Die Lauge wird durch Eindampfen auf 50 % Alkalihydroxid aufkonzentriert. Das dabei ausgeschiedene Alkalichlorid kann in der Soleaufbereitung im aufgeheizten Kühlwasser der Chlorwasserstoff- Synthese wieder zu Sole aufgelöst werden.
Die Besonderheit des Amalgamverfahrens besteht in der Nutzung von Quecksilber als Kathode. Während an der Anode in derselben Weise wie in den anderen Verfahren Chlorid-Ionen aus der zugeführten Sole zu Chlor oxidiert werden, erfolgt an der Kathode wegen der hohen Wasserstoffüberspannung des Quecksilbers keine Wasserstoffentwicklung, sondern die Reduktion von Alkalimetall-Kationen unter Bildung eines Amalgams. Da nur das Produkt der Anodenreaktion gasförmig ist, besteht keine Notwendigkeit zur Trennung von Anoden- und Kathodenraum. Das Amalgam fließt im Kreislauf über einen Zersetzer und wird dort mit Wasser zu Lauge, Wasserstoff und Quecksilber, das in die Zelle zurückgeführt wird, zersetzt. Aus der Elektrolysezelle tritt eine Dünnsole aus, die ebenso wie beim Membranverfahren in der Soleaufbereitung mit dem aufgewärmten Kühlwasser der Chlorwasserstoff-Synthese und frischem Alkalichlorid angereichert wird.

Alkalichlorid-Elektrolyseanlagen werden üblicherweise bei Temperaturen zwischen 80 und 95 °C betrieben, daher ist eine Vorwärmung der zugeführten Sole bzw. des zur Soleaufbereitung eingesetzten Wassers ohnehin erforderlich.
Erfindungsgemäß wird für die Soleherstellung bzw. -aufbereitung das aufgeheizte Kühlwasser der Chlorwasserstoff-Synthese verwendet, wie in Figur 1 schematisch dargestellt. Das bei der Kühlung der Brennkammer und ggf. des Gaskühlers oder/und des Absorbers aufgeheizte Wasser wird in die Soleaufbereitungsanlage eingespeist. Dort wird durch Auflösen des zu elektrolysierenden Alkalichlorids, z.B. Natriumchlorid, die für die Elektrolyse benötigte Konzentration der Sole eingestellt. Die so aufbereitete Sole wird der Elektrolyse zugeführt, wo in bekannter Weise die Zielprodukte Natronlauge, Chlor und Wasserstoff hergestellt werden. Zumindest teilweise werden die Produkte Chlor und Wasserstoff in der mit der Elektrolyse gekoppelten Chlorwasserstoff-Synthese zu Chlorwasserstoff bzw. Salzsäure umgesetzt, ggf werden Teilströme dieser Produkte anderen Nutzungen zugeführt. Chlorwasserstoff bzw. Salzsäure werden verkauft oder weiterverarbeitet bzw. anderen Verwendungen zugeführt.
Ggf. wird ein Teil der gewonnenen Salzsäure dem Solezustrom der Elektrolyse zugeführt, um die Sole anzusäuern. Die Ansäuerung der Sole dient dazu, in der Elektroysezelle die anodische Sauerstoffbildung zu unterdrücken.

Pro Tonne erzeugten Natriumhydroxids (NaOH 100 %) müssen in der Soleaufbereitung mindestens 1,5 m³ Wasser zugeführt werden. Der Wasserbedarf ist um so höher, je umfangreicher die Reinigungsbehandlung ist, der die Sole unterzogen wird, z.B. über Fällungs-, Klärungs- und Filtrationsstufen.

Für die erfindungsgemäße Nutzung als Lösungsmittel ist es nicht nötig, das Kühlwasser in der Chlorwasserstoff-Synthese auf ein so hohes Temperaturniveau aufzuheizen, wie es bei der energetischen Nutzung aus Effektivitätsgründen geboten ist.
Bevorzugt wird das Kühlwasser auf eine Temperatur von maximal 80 °C erwärmt. Dann ist für das erfindungsgemäße Verfahren kein Überdruck im Kühlkreislauf notwendig. Die erfindungsgemäße Auskopplung der Abwärme aus der Chlorwasserstoff-Synthese auf einem niedrigeren Temperaturniveau ohne Überdruck des Wärmeträgermediums erlaubt es, für den Chlorwasserstoff-Reaktor weniger druck- und temperaturbeständige - und daher i.a. preiswertere - Werkstoffe zu verwenden. Beispielsweise kann ein herkömmlicher Reaktor mit einer Brennkammer aus Graphit und einem Stahlmantel benutzt werden.
Eine ggf. noch erforderliche zusätzliche Wärmemenge, um die mit dem auf maximal 80 °C erwärmten Kühlwasser der Chlorwasserstoff-Synthese hergestellte Sole auf die für den Zellbetrieb nötige Temperatur zu erwärmen, kann durch eine andere Wärmequelle bereitgestellt werden. Erfindungsgemäß wird aber der überwiegende Anteil der für die Soleerwärmung nötigen Wärme durch das aufgewärmte Kühlwasser bereitgestellt.

Soll das Kühlwasser bei der Chlorwasserstoff-Synthese jedoch auf eine höhere Temperatur als 80 °C aufgeheizt werden, so ist es aus Sicherheitsgründen erforderlich, zur Vermeidung von Siedeverzügen und Dampfschlägen das Kühlwasser unter Druck zu halten, und die entsprechenden Anlagenteile aus druckfesten Werkstoffen entsprechend dem Pressure Equipment Directive 97/23/EC oder entsprechenden Normen zu fertigen. Die Chlorwasserstoff-Synthese muss dann in einer Brennkammer aus Stahl oder einem anderen hinreichend temperaturbeständigen, typischerweise metallischem Werkstoff ablaufen.

Erfindungsgemäß kann auch das Kühlwasser des Absorbers genutzt werden, vorausgesetzt, die gewünschte Salzsäurekonzentration erlaubt eine hinreichende Aufheizung des Kühlwassers, dass eine solche Nutzung sinnvoll ist. Dies ist aber nur bei niedrigen Konzentrationen der Fall. Salzsäure mit einem massebezogenen Chlorwasserstoffgehalt von 38 % siedet bei 50 - 55 °C, so dass hier nur geringe, technisch und ökonomisch wenig effektive Aufheizung des Kühlwassers möglich ist.

Die Erfindung ist nicht an die ausschließliche Verwendung von Chlor und Wasserstoff als Ausgangsstoffe für die Chlorwasserstoffsynthese gebunden. Chlorgas kann durch chlorhaltige Rest- bzw. Abgase bzw. Wasserstoff durch ein anderes Brenngas, z.B. Erdgas, mit Zuspeisung von Luft ersetzt werden. Entscheidend ist, dass das bei der Kühlung der Syntheseanlage erwärmte Kühlwasser erfindungsgemäß stofflich, d.h. als Edukt oder Lösungsmittel, genutzt wird.

## Patentansprüche

1. Verfahren zur Rückgewinnung und Nutzung der bei der Synthese von Chlorwasserstoff aus Chlor bzw. chlorhaltigen Gasen und Wasserstoff bzw. einem anderen Brenngas mit Zuspeisung von Luft in der Brennkammer freigesetzten Wärme durch Kühlung der Brennkammer mit Wasser,
**dadurch gekennzeichnet, dass**
das bei der Kühlung der Brennkammer erwärmte Kühlwasser in einem anderen Prozess als Edukt oder Lösungsmittel genutzt wird.

2. Verfahren nach Anspruch 1, **dadurch gekennzeichnet, dass**
der Brennkammer ein Gaskühler nachgeschaltet ist, der ebenfalls mit Wasser gekühlt wird, und das bei der Kühlung des Gaskühlers erwärmte Kühlwasser als Edukt oder Lösungsmittel genutzt wird.

3. Verfahren nach Anspruch 1, **dadurch gekennzeichnet, dass**
der Brennkammer oder der Brennkammer mit Gaskühler ein Absorber zur Herstellung von Salzsäure durch Absorption des Chlorwasserstoffgases in Wasser oder verdünnter Salzsäure nachgeschaltet ist, der ebenfalls mit Wasser gekühlt wird, und das bei der Kühlung des Absorbers erwärmte Kühlwasser als Edukt oder Lösungsmittel genutzt wird.

4. Verfahren nach Anspruch 1, 2 oder 3, **dadurch gekennzeichnet, dass**
das erwärmte Kühlwasser der Soleaufbereitung einer Alkalichlorid-Elektrolyse zugeführt und dort als Lösungsmittel für die Herstellung von Sole, die im Elektrolyseur elektrolysiert wird, eingesetzt wird.

5. Verfahren nach einem der Ansprüche 1 bis 4, **dadurch gekennzeichnet, dass**
das Kühlwasser auf maximal 80 °C erwärmt wird.

6. Verfahren nach Anspruch 5, **dadurch gekennzeichnet, dass**
die Chlorwasserstoff-Synthese in einer Brennkammer aus Graphit durchgeführt wird.

7. Verfahren nach Anspruch 1 bis 4, **dadurch gekennzeichnet, dass**
die Chlorwasserstoff-Synthese in einer gekühlten Stahlbrennkammer abläuft, wobei das Kühlwasser auf eine Temperatur von mehr als 80 °C erwärmt und unter Druck gehalten wird.
